# EUROPEAN PATENT APPLICATION

(11) **EP 4 167 529 A1**
(43) Date of publication of application: **19.04.2023**
(21) Application number: 21825192.4
(22) Date of filing: 16.06.2021
(51) Int. Cl.: H04L 12/24

(54) **SLICE DATA TRANSMISSION METHOD AND APPARATUS, ELECTRONIC DEVICE, AND COMPUTER READABLE STORAGE MEDIUM**

(30) Priority: 18.06.2020 CN 202010560166
(71) Applicant: ZTE Corporation, Shenzhen, Guangdong 518057 (CN)
(72) Inventor: LIU, Junjie, Shenzhen, Guangdong 518057 (CN)
(74) Representative: Canzler & Bergmeier Patentanwälte Partnerschaft mbB
(86) International application number: PCT/CN2021/100276
(87) International publication number: WO 2021/254366

(57) **Abstract**

The present application relates to the technical field of communications. Disclosed are a slice data transmission method and apparatus, an electronic device, and a computer readable storage medium. The slice data transmission method comprises: determining the priority of slice service data on the basis of the slice service data and a first slice priority mapping table, wherein the first slice priority mapping table is a table of mapping relationships between slice identifiers and priorities of slice service data; determining a transmission link of the slice service data according to the slice service data and priority; and using the transmission link to transmit the slice service data.

## Description

### CROSS-REFERENCE TO RELATED APPLICATIONS

The present disclosure claims the priority to the Chinese Patent Application No. 202010560166.4 filed with the CNIPA on June 18, 2020, the entire contents of which are incorporated herein by reference.

### TECHNICAL FIELD

The present disclosure relates to the field of communication technology.

### BACKGROUND

After evolving into the 5-generation (5G) networks, mobile networks provide services for various types of devices having various requirements, so as to be applied to different application scenarios, such as mobile bandwidths, large-scale Internet of Things, and mission-critical Internet of Things. In order to flexibly meet different requirements in aspects of mobility, charging, security, policy control, delay and reliability in the different application scenarios, a concept of network slicing is proposed in the 5G networks.

5G network slices are logical networks partitioned based on a physical network, and are end-to-end networks spanning three domains of a radio access network, a transmission network and a core network. The network slices are isolated from each other, have different Service-Level Agreements (SLAs), and are not affected by each other.

### SUMMARY

In an aspect, the present provides a method for transmitting slice data, including: determining a priority level of slice service data based on the slice service data and a first slice priority level mapping table, the first slice priority level mapping table being a table of mapping relationship between slice identifiers of slice service data and priority levels; determining a transmission link for the slice service data according to the slice service data and the priority level; and transmitting the slice service data using the transmission link.

In another aspect, the present disclosure provides a device for transmitting slice data, including: a slice priority level determination module configured to determine a priority level of slice service data based on the slice service data and a first slice priority level mapping table, the first slice priority level mapping table is a table of mapping relationship between slice identifiers of slice service data and priority levels; a transmission link determination module configured to determine a transmission link for the slice service data according to the slice service data and the priority level; and a transmission module configured to transmit the slice service data using the transmission link.

In still another aspect, the present disclosure provides an electronic device, including: at least one processor; a memory having stored thereon at least one program, which, when executed by the at least one processor, causes the at least one processor to perform at least one operation of the method for transmitting slice data provided by the the present disclosure; and at least one I/O interface connected between the at least one processor and the memory and configured to enable information interaction between the at least one processor and the memory.

In yet another aspect, the present disclosure provides a computer-readable storage medium having a computer program stored thereon, the computer program, when executed by a processor, causes at least one operation of the method for transmitting slice data provided by the present disclosure to be implemented.

### BRIEF DESCRIPTION OF DRAWINGS

FIG. 1 is a schematic diagram illustrating associating 5G network slices based on Virtual Local Area Network IDs (VLAN IDs).
FIG. 2 is a flowchart illustrating a method for transmitting slice data according to the present disclosure.
FIG. 3 is another flowchart illustrating a method for transmitting slice data according to the present disclosure.
FIG. 4 is a schematic diagram illustrating arrangement and deployment of slices and association of the slices according to the present disclosure.
FIG. 5 is a flowchart of arranging and deploying slices and associating the slices according to the present disclosure.
FIG. 6 is a schematic diagram illustrating determining a priority level of slice service data by a first priority level setting device according to the present disclosure.
FIG. 7 is a schematic diagram illustrating determining a transmission path for slice service data by a second priority level setting device according to the present disclosure.
FIG. 8 is a block diagram illustrating a principle of a device for transmitting slice data according to the present disclosure.
FIG. 9 is a flowchart illustrating a method for transmitting slice data according to the present disclosure.
FIG. 10 is another flowchart illustrating a method for transmitting slice data according to the present disclosure.
FIG. 11 is a block diagram illustrating a principle of an electronic device according to the present disclosure.

### DETAIL DESCRIPTION OF EMBODIMENTS

In order to enable those of ordinary skill in the art to better understand technical solutions of the present disclosure, a method and a device for transmitting slice data, an electronic device, and a computer-readable storage medium provided by the present disclosure are described in detail below with reference to the drawings.

Exemplary embodiments will be described more fully below with reference to the drawings, but the exemplary embodiments may be embodied in different forms, and should not be interpreted as limitations. Rather, the exemplary embodiments are provided to make the present disclosure thorough and complete, and are intended to enable those of ordinary skill in the art to fully understand the scope of the present disclosure.

The term "and/or" used herein includes one associated listed item or any and all combinations of one or more of the associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise/include" and/or "be made of" used herein indicate(s) the presence of features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

Different slices are associated by identifying data of the different slices through VLAN IDs, so as to realize communication between networks of different domains in a 5G slice network. For example, a radio access network, a transmission network, and a core network are respectively identified through the VLAN IDs, and are connected to each other.

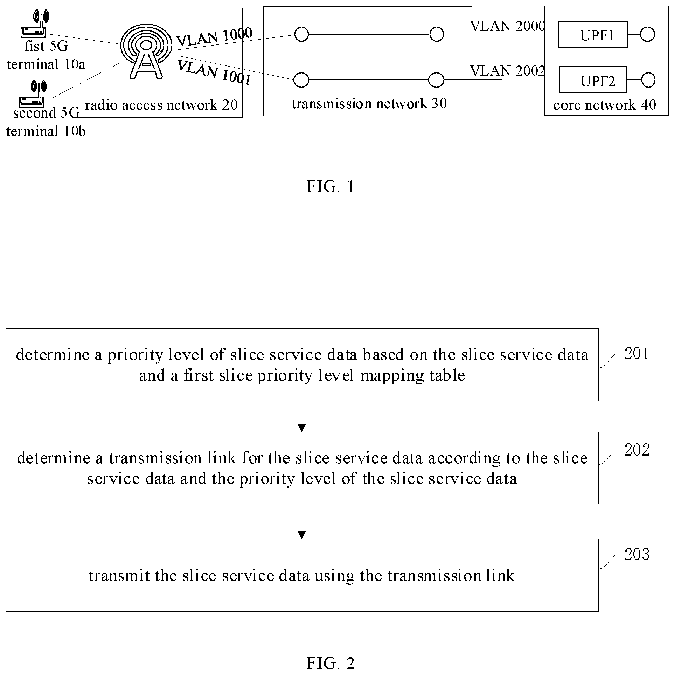

FIG. 1 is a schematic diagram illustrating associating 5G network slices based on the VLAN IDs. As shown in FIG. 1, after a first 5G terminal 10a and a second 5G terminal 10b are connected to a radio access network 20, a Centralized Unit (CU) and a Distributed Unit (DU) add VLAN 1000 to data of the first 5G terminal 10a and add VLAN 1001 to data of the second 5G terminal 10b, so as to distinguish the data of the first 5G terminal 10a from the data of the second 5G terminal 10b. In a case where the data of the first 5G terminal 10a and the data of the second 5G terminal 10b enter a core network 40 through a transmission network 30, the transmission network 30 adds VLAN 2000 and VLAN 2002 to the data of the first 5G terminal 10a and the data of the second 5G terminal 10b, respectively. After a User Plane Function (UPF) entity in the core network 40 obtains the data, the UPF entity may distinguish the data of the first 5G terminal 10a from the data of the second 5G terminal 10b according to VLAN 2000 and VLAN 2002.

In an actual network deployment process, a condition that transmission resources are not enough to allocate a VLAN ID to each network slice often occurs, with a result that multiple slices share one VLAN ID after a terminal is connected to the radio access network, so that isolation and association of the networks of three domains, i.e., the radio access network, the transmission network and the core network, cannot be realized, and the transmission network can merely provide a shared link for data transmission, which causes that data of multiple network slices influence on each other, and service of quality of the network slices is affected. In addition, since the network slices are isolated from each other, have different SLAs, and are not affected by each other, resulting in a relatively low utilization rate of network resources.

In order to avoid influence of data of different network slices on each other and improve the quality of service of the network slices, an embodiment of the present disclosure provides a method for transmitting slice data, which is applied to network slices, so as to realize association of different network slices, eliminate influence of data of different network slices on each other, and improve the quality of service of the network slices under a condition with limited transmission resources.

FIG. 2 is a flowchart illustrating a method for transmitting slice data according to the present disclosure. As shown in FIG. 2, the method includes following operations 201 to 203.

At operation 201, a priority level of slice service data is determined based on the slice service data and a first slice priority level mapping table.

In the present disclosure, the slice service data is a service request which is initiated by a user using a terminal to a communication network. The service data may be service data of a call, service data of a short message, service data of a network service, or the like. The terminal used by the user may be a 5G terminal or a terminal of another type.

In the present disclosure, the communication network may be a communication network shown in FIG. 1, and may also be another communication network, which is not limited in the present disclosure. For example, the communication network includes a radio access network, a bearer network, a core network, or the like, the slice service data initiated by the user enters the radio access network through a base station, and the radio access network determines the priority level according to the slice service data, and then transmits the slice service data in the communication network.

In the present disclosure, the priority level of the slice service data is determined according to the first slice priority level mapping table, that is, according to a table of mapping relationship between slice identifiers (slice IDs) in slice service data and priority levels of slices.

Table 1 is the first slice priority level mapping table, which includes information of slice IDs and information of priority levels, and a corresponding relationship exists between the slice IDs and the priority levels. Therefore, after the slice ID is determined by extracting from the slice service data, the priority level corresponding to the slice ID may be determined.

**Table 1**

| Slice ID | Priority Level |
|---|---|
| I-10001 | 2 |
| 1-10002 | 3 |

For example, in a case where the radio access network receives the slice service data of the user through the base station, the radio access network acquires the slice ID of 1-10001 from the slice service data, and then searches from the first slice priority level mapping table to obtain the priority level of 2 corresponding to the slice ID of I-10001.

At operation 202, a transmission link for the slice service data is determined according to the slice service data and the priority level of the slice service data.

In an implementation, after the priority level of the slice service data is determined, the transmission link for the slice service data is determined according to the slice service data and the priority level of the slice service data. The transmission link for the slice service data may be determined according to a second slice priority level mapping table. Table 2 is the second slice priority level mapping table. The second slice priority level mapping table includes information of slice IDs, information of priority levels, and information of transmission link IDs, and a corresponding relationship exists among the slice IDs, the priority levels, and the transmission link IDs.

**Table 2**

| Slice ID | Priority Level | Transmission link ID |
|---|---|---|
| I-10001 | 2 | VPN1 |
| I-10002 | 3 | VPN2 |

For example, in a case of forwarding the slice service data, the slice ID is acquired from the slice service data, and the priority level of 2 of the slice service data is determined by searching from the Table 2 according to the slice ID, and then the transmission link ID of VPN1 is determined according to the slice ID and the priority level.

At operation 203, the slice service data is transmitted using the transmission link.

In the present disclosure, the slice service data is transmitted using the transmission link VPN1 determined at the operation 202.

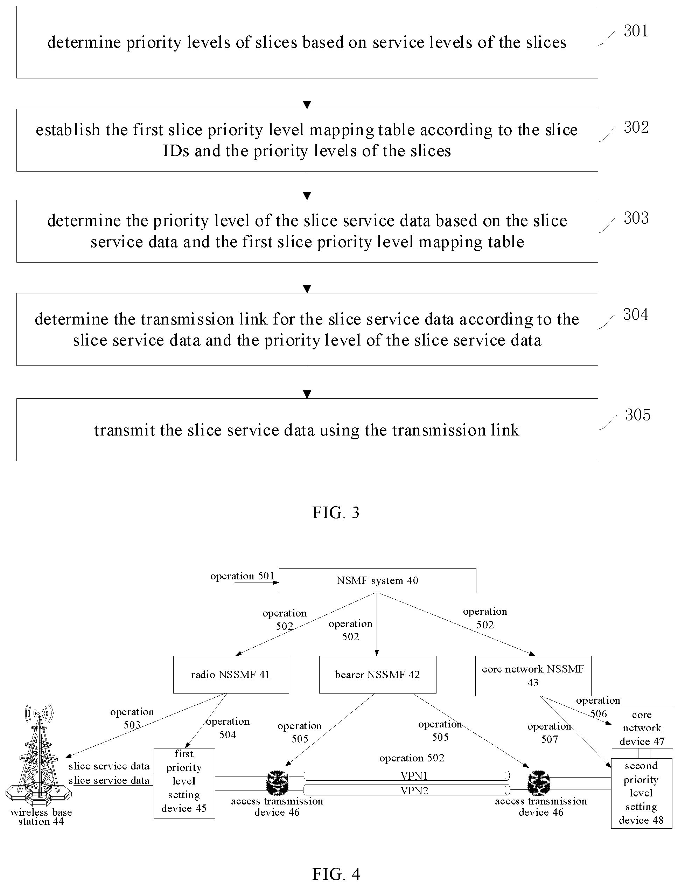

FIG. 3 is another flowchart illustrating a method for transmitting slice data according to the present disclosure. As shown in FIG. 3, the method includes following operations 301 to 305.

At operation 301, priority levels of slices are determined based on service levels of the slices.

In an implementation, in a case where a Network Slice Management Function (NSMF) system establishes a 5G slice network, the NSMF system arranges and deploys the slices, and associates the slices. For example, the NSMF system determines the priority levels of the slices according to the service levels of the slices, and then sends information of the priority levels of the slices to the radio access network, the bearer network, and the core network.

At operation 302, the first slice priority level mapping table is established according to the slice IDs and the priority levels of the slices.

In an implementation, the radio access network, the bearer network, and the core network establish the first slice priority level mapping table according to the slice IDs and the priority levels of the slices issued by the NSMF system, that is, establish the table of mapping relationship between the slice IDs and the slice priority levels.

At operation 303, a priority level of slice service data is determined based on the slice service data and the first slice priority level mapping table.

In the present disclosure, the slice service data is a service request which is initiated by the user using a terminal to a communication network. The service data may be service data of a call, service data of a short message, service data of a network service, or the like. The terminal used by the user may be a 5G terminal or a terminal of another type.

In the present disclosure, the communication network may be a communication network shown in FIG. 1, and may also be another communication network, which is not limited in the present disclosure. For example, the communication network includes a radio access network, a bearer network, and a core network, the slice service data initiated by the user enters the radio access network through a base station, and the radio access network determines the priority level according to the slice service data, and then transmits the slice service data in the communication network.

In the present disclosure, the priority level of the slice service data is determined according to the first slice priority level mapping table, that is, according to the table of mapping relationship between the slice IDs in the slice service data and the priority levels of slices.

At operation 304, a transmission link for the slice service data is determined according to the slice service data and the priority level of the slice service data.

In an implementation, after the priority level of the slice service data is determined, the transmission link for the slice service data is determined according to the slice service data and the priority level of the slice service data. The transmission link for the slice service data may be determined according to a second slice priority level mapping table.

At operation 305, the slice service data is transmitted using the transmission link.

In the present disclosure, the slice service data is transmitted using the transmission link VPN1 determined at the operation 304. Thus, end-to-end association and isolation of different transmission channels are realized in the radio access network, the bearer network, and the core network, so that transmission resources are effectively utilized and transmission quality is guaranteed under a condition with limited VLAN resources.

At the operation 301, the priority levels of the slices are determined based on the service levels of the slices during establishing the 5G slice network, that is, the slices are arranged and deployed and then associated during establishing the 5G slice network. FIG. 4 is a schematic diagram illustrating arrangement and deployment of slices and association of the slices according to the present disclosure. As shown in FIG. 4, an NSMF system 40 manages and controls a radio Network Slice Subnet Management Function (NSSMF) 41, a bearer NSSMF 42, and a core network NSSMF 43, and issues information of arrangement and deployment of the slices to the radio NSSMF 41, the bearer NSSMF 42, and the core network NSSMF 43.

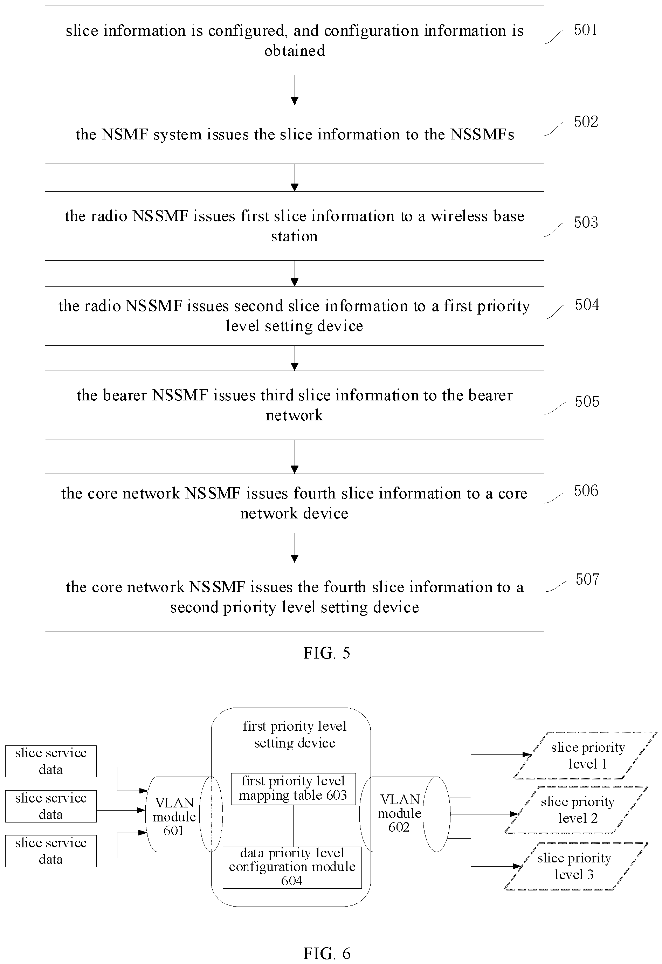

FIG. 5 is a flowchart of arranging and deploying slices and associating the slices according to the present disclosure. With reference to FIG. 4 and FIG. 5, the arranging and deploying the slices and associating the slices may include following operations 501 to 507.

At operation 501, during a NSMF system establishing a 5G slice network, slice information is configured, and configuration information is obtained.

In an implementation, the configuration information includes information of slice IDs, information of service levels of the slices, VLAN information for a radio access network accessing a bearer network, VLAN information for a core network accessing the bearer network, and priority levels of the slices.

The service level of the slice is for selecting virtual and physical resources for a particular communication service type based on an SLA. The SLA includes parameters such as a number of users, quality of service (QoS), and a bandwidth, and different SLAs define different communication service types.

At operation 502, the NSMF system issues the slice information to NSSMFs.

In an implementation, after the NSMF system obtains the configuration information, the NSMF system parses the configuration information to obtain the slice information, and then sends the slice information to the radio NSSMF 41, the bearer NSSMF 42, and the core network NSSMF 43.

At operation 503, a radio NSSMF 41 issues first slice information to a wireless base station 44.

In an implementation, the radio NSSMF 41 issues the first slice information to the wireless base station 44. The first slice information includes the information of slice IDs, the VLAN information for the radio access network accessing the bearer network, and parameters of the SLA. The wireless base station 44 is a base station disposed in the radio access network, and may be a base station with a two-stage (i.e., distributed/centralized) architecture.

At operation 504, the radio NSSMF 41 issues second slice information to a first priority level setting device 45.

In an implementation, the radio NSSMF 41 issues the second slice information to the first priority level setting device 45 at a side where the base station is located. The second slice information includes the information of slice IDs and information of transmission priority levels of the slices. The first priority level setting device 45 establishes a first mapping table of the slice IDs and the priority levels based on the information of slice IDs and the information of transmission priority levels of the slices.

At operation 505, a bearer NSSMF 42 issues third slice information to the bearer network.

In an implementation, the bearer NSSMF 42 issues the third slice information to an access transmission device 46 of the bearer network. The third slice information includes the information of slice IDs and the information of transmission priority levels of the slices. The access transmission device 46 of the bearer network establishes a second mapping table of the slice IDs and the transmission priority levels of the slices based on the information of slice IDs and the information of transmission priority levels of the slices. The access transmission device 46 of the bearer network includes the access transmission device 46 located at a side where the radio access network is located and the access transmission device 46 located at a side where the core network is located.

At operation 506, the core network NSSMF 43 issues fourth slice information to a core network device (i.e., a device in the core network) 47.

In an implementation, the core network NSSMF 43 issues the fourth slice information to the core network device 47, and the core network device 47 configures the slice information. The fourth slice information includes the information of slice IDs and the VLAN information for accessing and transmission. The core network device 47 configures the slice information using the information of slice IDs and the VLAN information for accessing and transmission.

At operation 507, the core network NSSMF 43 issues the fourth slice information to a second priority level setting device 48. The fourth slice information includes the information of slice IDs and the information of transmission priority levels of the slices.

In an implementation, the core network NSSMF 43 issues the fourth slice information to the second priority level setting device 48, and the second priority level setting device 48 establishes a first mapping table of the slice IDs and the transmission priority levels of the slices according to the information of slice IDs and the information of transmission priority levels of the slices.

Through the above operations 501 to 507, the NSMF system 40 completes arranging and deploying the slices, and the radio NSSMF 41, the bearer NSSMF 42, and the core network NSSMF 43 can create end-to-end transmission paths.

After the user is connected to the radio access network through the base station, the first priority level setting device 45 configures the transmission priority level for the slice service data, the slice service data is transmitted to the bearer network through a VLAN, the access transmission device 46 of the bearer network determines the transmission link for the slice service data according to the slice ID and the transmission priority level of the slice service data, and transmits the slice service data to the core network using the transmission link, and the core network transmits the slice service data to a corresponding UPF entity based on the slice ID.

In an implementation, the first slice priority level mapping table may be stored in a device of the radio access network, and the second slice priority level mapping table may be stored in a device of the bearer network. For example, after the radio NSSMF 41 issues the information of slice IDs and the information of transmission priority levels of the slices to the first priority level setting device 45, the first priority level setting device 45 associates the slice IDs with the transmission priority levels of the slices, and generates and stores the first slice priority level mapping table. Similarly, after the bearer NSSMF 42 issues the information of slice IDs and the information of transmission priority levels of the slices to the access transmission devices 46 of the bearer network, the access transmission devices 46 of the bearer network associates the slice IDs with the transmission priority levels of the slices, creates transmission links VPN, obtains the second slice priority level mapping table indicating the corresponding relationship among the slice IDs, the transmission priority levels of the slices, and the transmission links, and stores the second slice priority level mapping table in the access transmission devices 46 of the bearer network. Different transmission links allow for transmission of corresponding slice service data, so that different transmission channels are isolated, thereby avoiding mutual influence of different slice service data, and improving the transmission quality.

FIG. 6 is a schematic diagram illustrating determining the priority level of the slice service data by the first priority level setting device 45 according to the present disclosure. With reference to FIG. 4 and FIG. 6, after receiving a service flow from a terminal, the base station 44 slices the service flow according to communication resources to obtain the slice service data, and then transmits the slice service data to the first priority level setting device 45 through a VLAN module 601, a data priority level configuration module 604 in the first priority level setting device 45 acquires the slice ID from the slice service data, and then acquires the priority level corresponding to the slice ID from a first priority level mapping table 603 according to the slice ID, so as to determine the priority level of the slice service data, and then the slice service data and the priority level of the slice service data are sent to the bearer network through a VLAN module 602.

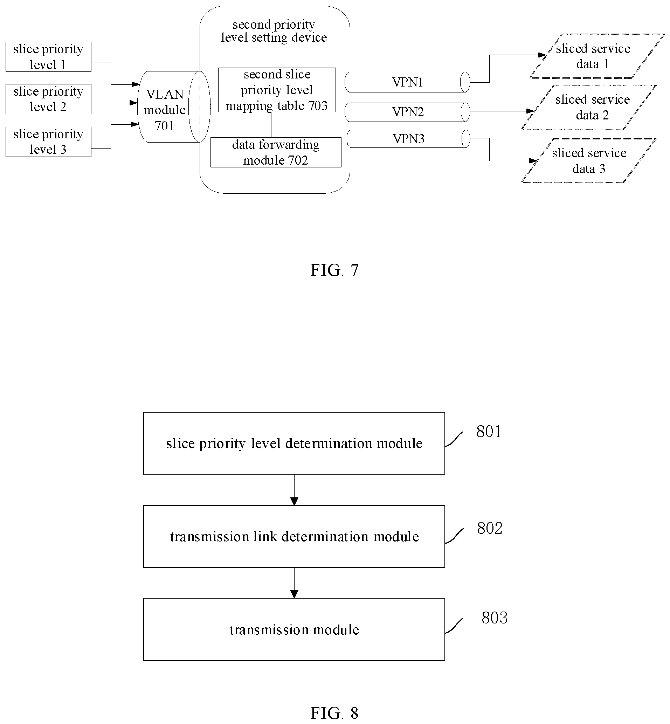

FIG. 7 is a schematic diagram illustrating determining a transmission path for the slice service data by the second priority level setting device 48 according to the present disclosure. With reference to FIG. 4 and FIG. 7, during transmitting the slice service data to the access transmission devices 46 of the bearer network through a VLAN module 701, a data forwarding module 702 in the second priority level setting device 48 extracts the slice ID from the slice service data, searches from a second slice priority level mapping table 703 according to the slice ID and the priority level of the slice service data to obtain a transmission link ID corresponding to the slice service data, and then correspondingly transmits the slice service data in the transmission link.

For example, if the data forwarding module 702 acquires the slice ID of I-100001 from the slice service data 1 and accordingly acquires the priority level of 1, the data forwarding module 702 searches from the second slice priority level mapping table 703 according to the slice ID of I-100001 and the priority level of 1 to determine that the transmission link ID is VPN1. In a similar way, the data forwarding module 702 may acquire the slice ID of I-100002 from the slice service data 2 and accordingly acquire the priority level of 2, and then search from the second slice priority level mapping table 703 according to the slice ID of I-100002 and the priority level of 2 to determine that the transmission link ID is VPN2; and the data forwarding module 702 may acquire the slice ID of I-100003 from the slice service data 3 and accordingly acquire the priority level of 3, and then search from the second slice priority level mapping table 703 according to the slice ID of I-100003 and the priority level of 3 to determine that the transmission link ID is VPN3.

In an implementation, after the transmission link for the slice service data is determined and before the slice service data is transmitted using the transmission link, the slice service data is encapsulated.

In the present disclosure, before transmitting the slice service data using the transmission link, the method for transmitting slice data may further include: configuring the priority level of the slice service data in a header of the slice service data; and encapsulating the slice service data configured with the priority level of the slice service data.

For example, after the first priority level setting device determines the priority level of the slice service data, the priority level is configured in the header of the slice service data, and then the slice service data configured with the priority level is sent to the bearer network through the VLAN.

In an implementation, the slice service data is correspondingly transmitted to the UPF entity of the core network through a transmission link of bearer sub-slice. The UPF entity is confirmed according to the slice service data in a way not limited in the present disclosure.

According to the method for transmitting slice data provided by the present disclosure, the priority level of the slice service data may be determined based on the slice service data and the first slice priority level mapping table; the transmission link for the slice service data may be determined according to the slice service data and the priority level of the slice service data; and the slice service data may be transmitted using the transmission link. Such method of determining the transmission link according to the priority level of the slice service data realizes end-to-end association of the slice service data of the user in a logic network according to the priority levels, and also realizes the isolation of the transmission channels of the slices, thereby effectively utilizing the transmission resources and ensuring the transmission quality under the condition with limited VLAN resources.

The present disclosure further provides a device for transmitting slice data, configured to realize end-to-end association and isolation of transmission channels of slices in a 5G communication network under the condition with limited VLAN resources.

FIG. 8 is a block diagram illustrating a principle of a device for transmitting slice data according to the present disclosure. As shown in FIG. 8, the device includes: a slice priority level determination module 801, a transmission link determination module 802, and a transmission module 803.

The slice priority level determination module 801 is configured to determine a priority level of slice service data based on the slice service data and a first slice priority level mapping table.

In the present disclosure, the slice service data is a service request which is initiated by a user using a terminal to a communication network. The service data may be service data of a call, service data of a short message, service data of a network service, or the like. The terminal used by the user may be a 5G terminal or a terminal of another type.

In the present disclosure, a priority level of slice service data is determined according to the first slice priority level mapping table, which is a table of mapping relationship between slice IDs in slice service data and priority levels of slices.

Table 1 is the first slice priority level mapping table, which includes information of slice IDs and information of priority levels, and a corresponding relationship exists between the slice IDs and the priority levels. Therefore, after a slice ID is determined by extracting from the slice service data, the priority level corresponding to the slice ID may be determined.

**Table 1**

| Slice ID | Priority Level |
|---|---|
| I-10001 | 2 |
| I-10002 | 3 |

For example, during a radio access network receiving the slice service data of the user through a base station, the radio access network acquires the slice ID of I-10001 from the slice service data, and then searches from the first slice priority level mapping table to obtain that the priority level corresponding to the slice ID of I-10001 is 2.

The transmission link determination module 802 is configured to determine a transmission link for the slice service data according to the slice service data and the priority level of the slice service data.

In an implementation, after the priority level of the slice service data is determined, the transmission link for the slice service data is determined according to the slice service data and the priority level of the slice service data. The transmission link for the slice service data may be determined according to a second slice priority level mapping table. Table 2 is the second slice priority level mapping table, in which the information of slice IDs, the information of priority levels, and information of transmission link IDs are included, and a corresponding relationship exists among the slice IDs, the priority levels, and the transmission link IDs.

**Table 2**

| Slice ID | Priority Level | Transmission link ID |
|---|---|---|
| I-10001 | 2 | VPN1 |
| I-10002 | 3 | VPN2 |

For example, during forwarding the slice service data, the slice ID is acquired from the slice service data, the priority level of 2 of the slice service data is determined by searching from the Table 2 according to the slice ID, and then the transmission link ID of VPN1 is determined according to the slice ID and the priority level.

The transmission module 803 is configured to transmit the slice service data using the transmission link.

In an implementation, the transmission module 803 may be disposed in a radio access network, a bearer network, or a core network in a 5G communication network to achieve data transmission.

In order to facilitate a better understanding of the present disclosure, the method for transmitting slice data provided by the present disclosure will be further described in detail below in conjunction with the method and the device for transmitting slice data mentioned above. The 5G communication network includes the radio access network, the bearer network, and the core network, and is divided into radio sub-slices, bearer sub-slices, and core network sub-slices, and each sub-slice is managed by the NSMF system. By adopting the method for transmitting slice data provided by the present disclosure, end-to-end association of the slice service data among the radio sub-slices, the bearer sub-slices and the core network sub-slices is realized, and isolation of transmission channels of the slices is ensured as well.

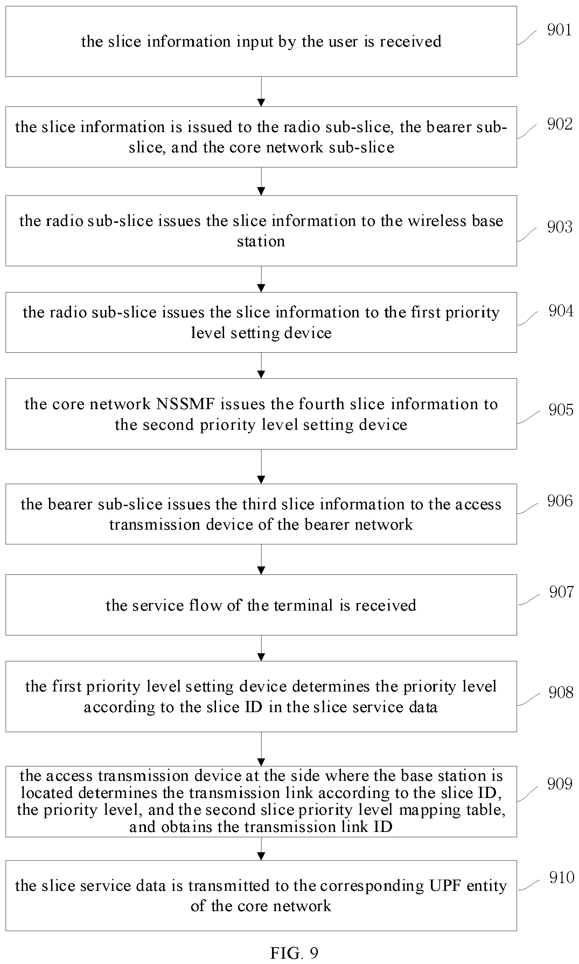

FIG. 9 is a flowchart illustrating a method for transmitting slice data according to the present disclosure. With reference to FIG. 9, the method may include following operations 901 to 910.

At operation 901, slice information input by a user is received.

The slice information is the information configured by the user during establishing a 5G slice network, and includes information of slice IDs, VLAN information of a slice-associated transmission node, information of service levels of slices, VLAN information for a radio sub-slice accessing a bearer sub-slice, VLAN information for a core network sub-slice accessing the bearer sub-slice, and priority levels of slices.

At operation 902, the slice information is issued to the radio sub-slice, the bearer sub-slice, and the core network sub-slice.

At operation 903, the radio sub-slice issues the slice information to a wireless base station.

In an implementation, the radio sub-slice issues first slice information to the wireless base station, and the wireless base station configures the slice information. After the wireless base station receives service data from a terminal, the wireless base station determines slice service data for the service data according to a slicing message.

The first slice information includes the information of slice IDs, the VLAN information for the radio sub-slice accessing the bearer sub-slice, and parameters of an SLA. In addition, the wireless base station is a base station disposed in the radio access network, and may be a base station with a two-stage (i.e., distributed/centralized) architecture.

At operation 904, the radio sub-slice issues the slice information to a first priority level setting device.

In an implementation, the radio sub-slice issues second slice information to the first priority level setting device, and the first priority level setting device establishes and stores a first mapping table of the slice IDs and the priority levels according to the second slice information.

The second slice information includes the information of slice IDs and information of transmission priority levels of the slices.

At operation 905, the core network sub-slice issues fourth slice information to a second priority level setting device.

In an implementation, the core network sub-slice issues the fourth slice information to the second priority level setting device, and the second priority level setting device establishes a first mapping table of the slice IDs and the priority levels according to the fourth slice information.

The fourth slice information includes the information of slice IDs and the information of transmission priority levels of the slices.

At operation 906, the bearer sub-slice issues third slice information to an access transmission device of the bearer network.

In an implementation, the bearer sub-slice issues the third slice information to the access transmission device of the bearer network, and the access transmission device of the bearer network establishes and stores a second slice priority level mapping table according to the third slice information. The second slice priority level mapping table is a table of mapping relationship between the slice IDs, the priority levels, and transmission links.

The third slice information includes the information of slice IDs and the information of transmission priority levels of the slices.

It should be noted that the access transmission device of the bearer network includes the access transmission device at a side where the base station is located and the access transmission device at a side where the core network is located, and each access transmission device stores the second slice priority level mapping table.

At operation 907, a service flow is received from a terminal.

In an implementation, the slice service data is from the terminal and is accessed by the base station of the radio sub-slice. After the base station receives the slice service data, the base station transmits the slice service data to the first priority level setting device.

The terminal may be a device for communication, such as a mobile phone or a smart watch.

At operation 908, the first priority level setting device determines the priority level according to the slice ID in the slice service data.

In an implementation, the first priority level setting device extracts the slice ID from the slice service data, searches from the first slice priority level mapping table according to the slice ID, determines the priority level of the slice service data, configures the priority level in a header of the slice service data, and then encapsulates the slice service data configured with the priority level.

At operation 909, the access transmission device at the side where the base station is located determines a transmission link according to the slice ID, the priority level, and the second slice priority level mapping table, and obtains a transmission link ID (i.e., an ID of the transmission link).

In an implementation, after the encapsulated slice service data is sent to the access transmission device of the bearer sub-slice at the side where the base station is located through a VLAN, the access transmission device acquires the slice ID and the priority level from the encapsulated slice service data, and determines the transmission link ID according to the slice ID and the priority level.

At operation 910, the slice service data is transmitted to a corresponding UPF entity of the core network.

In an implementation, after the slice service data reaches the core network via the bearer sub-slice, the core network identifies the slice ID, and transmits the slice service data to the corresponding UPF entity according to the slice ID.

In a case where the UPF entity transmits data downstream, the second priority level setting device of the core network sub-slice configures the priority level for the slice service data, and transmits the slice service data to the bearer sub-slice through the VLAN, and the access transmission device of the bearer sub-slice at the side where the core network is located determines the transmission link for the slice service data according to the slice service data and the priority level of the slice service data, and transmits the slice service data to the base station of the radio sub-slice using the transmission link.

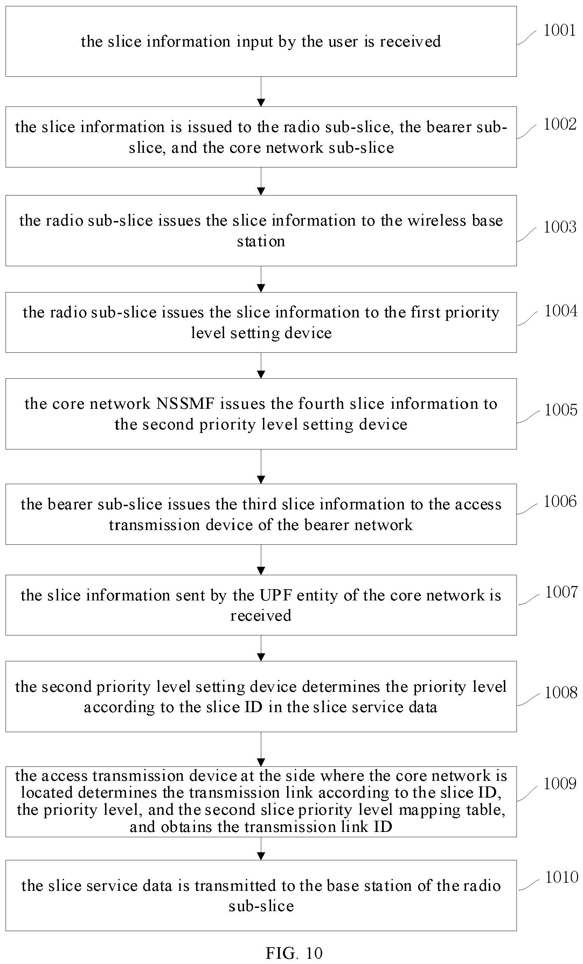

FIG. 10 is another flowchart illustrating a method for transmitting slice data according to the present disclosure. With reference to FIG. 10, the method may include following operations 1001 to 1010.

At operation 1001, slice information is received.

The slice information is configured by a user during establishing a 5G slice network, and includes information of slice IDs, VLAN information of a slice-associated transmission node, information of service levels of slices, VLAN information for a radio sub-slice accessing a bearer sub-slice, VLAN information for a core network sub-slice accessing the bearer sub-slice, and priority levels of the slices.

At operation 1002, the slice information is issued to the radio sub-slice, the bearer sub-slice, and the core network sub-slice.

At operation 1003, the radio sub-slice issues the slice information to a wireless base station.

In an implementation, the radio sub-slice issues the first slice information to the wireless base station, and the wireless base station configures the slice information. After the wireless base station receives service data from a terminal, the wireless base station determines slice service data for the service data according to a slicing message.

The first slice information includes the information of slice IDs, the VLAN information for the radio sub-slice accessing the bearer sub-slice, and parameters of an SLA. In addition, the wireless base station is a base station disposed in the radio access network, and may be a base station with a two-stage (i.e., distributed/centralized) architecture.

At operation 1004, the radio sub-slice issues the slice information to a first priority level setting device.

In an implementation, the radio sub-slice issues second slice information to the first priority level setting device, and the first priority level setting device establishes and stores a first mapping table of the slice IDs and the priority levels according to the second slice information.

The second slice information includes the information of slice IDs and information of transmission priority levels of the slices.

At operation 1005, the core network sub-slice issues fourth slice information to a second priority level setting device.

In an implementation, the core network sub-slice issues the fourth slice information to the second priority level setting device, and the second priority level setting device establishes a first mapping table of the slice IDs and the priority levels according to the fourth slice information.

The fourth slice information includes the information of slice IDs and the information of transmission priority levels of the slices.

At operation 1006, the bearer sub-slice issues third slice information to an access transmission device of the bearer network.

In an implementation, the bearer sub-slice issues the third slice information to the access transmission device of the bearer network, and the access transmission device of the bearer network establishes and stores a second slice priority level mapping table according to the third slice information. The second slice priority level mapping table is a table of mapping relationship among the slice IDs, the priority levels, and transmission links.

The third slice information includes the information of slice IDs and the information of transmission priority levels of the slices.

It should be noted that the access transmission device of the bearer network include the access transmission device at a side where the base station is located and the access transmission device at a side where the core network is located, and each access transmission device stores the second slice priority level mapping table.

At operation 1007, the slice information sent by a UPF entity of the core network is received.

At operation 1008, the second priority level setting device determines the priority level according to the slice ID in the slice service data.

In an implementation, the second priority level setting device extracts the slice ID from the slice service data, searches from the first slice priority level mapping table according to the slice ID, determines the priority level of the slice service data, configures the priority level in a header of the slice service data, and then encapsulates the slice service data configured with the priority level.

At operation 1009, the access transmission device at the side where the core network is located determines a transmission link according to the slice ID, the priority level, and the second slice priority level mapping table, and obtains a transmission link ID (i.e., an ID of the transmission link).

In an implementation, after the encapsulated slice service data is sent to the access transmission device of the bearer sub-slice at the side of the base station through a VLAN, the access transmission device acquires the slice ID and the priority level from the encapsulated slice service data, and determines the transmission link ID according to the slice ID and the priority level.

At operation 1010, the slice service data is transmitted to the base station of the radio sub-slice.

It should be noted that operations 1001 to 1006 are not necessary for every transmission; and after a configuration of the slice information is completed, operations 1007 to 1010 are to be performed.

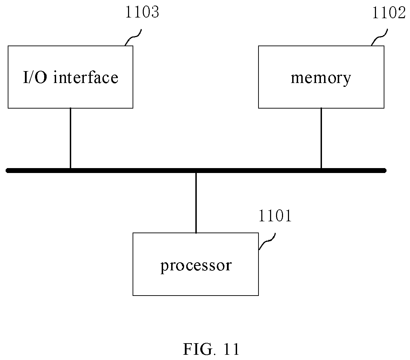

An embodiment of the present disclosure further provides an electronic device, FIG. 11 is a block diagram illustrating a principle of the electronic device according to the present disclosure, and as shown in FIG. 11, the electronic device includes: at least one processor 1101; a memory 1102 having stored thereon at least one program, and the at least one program, when executed by the at least one processor 1101, causes the at least one processor 1101 to perform at least one operation of the method for transmitting slice data provided by the present disclosure; and at least one I/O interface 1103 connected between the at least one processor 1101 and the memory 1102 and configured to enable information interaction between the at least one processor 1101 and the memory 1102.

The processor 1101 is a device having a data processing capability, and includes, but is not limited to, a Central Processing Unit (CPU); the memory 1102 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 1103 is connected between the processor 1101 and the memory 1102, is capable of enabling the information interaction between the processor 1101 and the memory 1102, and includes, but is not limited to, a data bus (Bus).

In an implementation, the processor 1101, the memory 1102, and the I/O interface 1103 are connected to each other through a bus, and are further connected to other components of the electronic device.

An embodiment of the present disclosure further provides a computer-readable storage medium having a computer program stored thereon, the program, when executed by a processor, causes at least one operation of the method for transmitting slice data provided by the present disclosure to be implemented.

It should be understood by those of ordinary skill in the art that all or some of the operations in the method disclosed above, functional modules/units in the system and the device may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable medium used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated data signals such as carrier wave or other transmission mechanism, and may include any information delivery medium.

The present disclosure discloses the exemplary embodiments using specific terms, but the terms are merely used for explanation and should be merely interpreted as having general illustrative meanings, rather than for the purpose of limitation. Unless expressly stated, it is apparent to those of ordinary skill in the art that features, characteristics and/or elements described in connection with a particular embodiment may be used alone or in combination with features, characteristics and/or elements described in connection with other embodiments. Therefore, it should be understood by those of ordinary skill in the art that various changes in the forms and the details may be made without departing from the scope of the present disclosure of the appended claims.

## Claims

1. A method for transmitting slice data, comprising:
determining a priority level of slice service data based on the slice service data and a first slice priority level mapping table, wherein the first slice priority level mapping table is a table of mapping relationship between slice identifiers of slice service data and priority levels;
determining a transmission link for the slice service data according to the slice service data and the priority level; and
transmitting the slice service data using the transmission link.

2. The method of claim 1, further comprising:
before the determining a priority level of slice service data based on the slice service data and a first slice priority level mapping table, determining the priority levels based on service levels of slices; and
establishing the first slice priority level mapping table according to the slice identifiers and the priority levels.

3. The method of claim 2, wherein the determining a priority level of slice service data based on the slice service data and a first slice priority level mapping table comprises:
acquiring the slice identifier of the slice service data based on the slice service data; and
determining the priority level based on the slice identifier of the slice service data and the first slice priority level mapping table.

4. The method of claim 2, wherein the determining a transmission link for the slice service data according to the slice service data and the priority level comprises:
acquiring the slice identifier of the slice service data based on the slice service data; and
determining the transmission link for the slice service data based on the slice identifier of the slice service data, the priority level, and a second slice priority level mapping table, wherein the second slice priority level mapping table is a table of mapping relationship between the slice identifiers, the priority levels, and transmission link identifiers.

5. The method of claim 4, wherein the first slice priority level mapping table is stored in a device of a radio access network and a device of a core network, and the second slice priority level mapping table is stored in a device of a bearer network.

6. The method of any one of claims 1 to 5, further comprising:
before the transmitting the slice service data using the transmission link, configuring the priority level in a header of the slice service data; and
encapsulating the slice service data configured with the priority level.

7. The method of any one of claims 1 to 6, further comprising:
after the transmitting the slice service data using the transmission link, transmitting the slice service data to a corresponding User Plane Function entity in a core network.

8. A device for transmitting slice data, comprising:
a slice priority level determination module configured to determine a priority level of slice service data based on the slice service data and a first slice priority level mapping table; wherein the first slice priority level mapping table is a table of mapping relationship between slice identifiers of slice service data and priority levels;
a transmission link determination module configured to determine a transmission link for the slice service data according to the slice service data and the priority level; and
a transmission module configured to transmit the slice service data using the transmission link.

9. An electronic device, comprising:
at least one processor;
a memory having stored thereon at least one program, the at least program, when executed by the at least one processor, causes the at least one processor to carry out the method for transmitting slice data of any one of claims 1 to 7; and
at least one I/O interface connected between the at least one processor and the memory and configured to enable information interaction between the at least one processor and the memory.

10. A computer-readable storage medium having a computer program stored thereon, wherein, the computer program, when executed by a processor, causes the method for transmitting slice data of any one of claims 1 to 7 to be implemented.
